Europäisches Patentamt

European Patent Office

Office européen des brevets

(19)

(11) **EP 0 604 252 B1**

(12) **FASCICULE DE BREVET EUROPEEN**

(45) Date de publication et mention
de la délivrance du brevet:
**14.05.1997 Bulletin 1997/20**

(51) Int Cl.6: **G01C 11/06**, G01C 21/00,
G06T 5/00

(21) Numéro de dépôt: **93402892.9**

(22) Date de dépôt: **30.11.1993**

(54) **Procédé d'aide au pilotage d'un aéronef volant à basse altitude**

Verfahren zur Steuerungshilfe eines tieffliegenden Flugkörpers

Method for aiding piloting of a low flying aircraft

(84) Etats contractants désignés:
**DE GB IT**

(30) Priorité: **22.12.1992 FR 9215512**

(43) Date de publication de la demande:
**29.06.1994 Bulletin 1994/26**

(73) Titulaire: **SAT (Société Anonyme de
Télécommunications)
75116 Paris (FR)**

(72) Inventeurs:
• **Samy, Roger**
**F-75625 Paris Cedex 13 (FR)**
• **Duclos, Daniel**
**F-75625 Paris Cedex 13 (FR)**

(74) Mandataire: **Bloch, Gérard
2, square de l'Avenue du Bois
75116 Paris (FR)**

(56) Documents cités:
**FR-A- 2 642 529**           **US-A- 4 695 959**

• **IEEE TRANSACTIONS ON AEROSPACE AND
ELECTRONIC SYSTEMS, vol. 27, no. 4, Juillet
1991, New York, US, pp. 741-746, XP2596643; B.
SRIDHAR et al.: 'Comparison of Motion and
Stereo Methods in Passive Ranging Systems'**

## Description

La présente invention concerne un procédé d'aide au pilotage d'un aéronef volant à basse altitude pour l'évitement d'objets d'une scène fixe observée par une caméra à bord de l'aéronef orientée sensiblement selon la trajectoire de l'aéronef, dans lequel, pour chaque image actuelle reçue de la caméra :

- on détermine des positions, dans l'image actuelle, de points caractéristiques des objets et on les mémorise,

- on compare lesdites positions aux positions correspondantes desdits points caractéristiques dans l'image précédente,

- on détermine dans l'image actuelle, pour chaque point caractéristique, le module et l'orientation d'un vecteur vitesse, correspondant à l'écart de position du point caractéristique entre l'image actuelle et l'image précédente,

- on détermine un point de concours, dans l'image actuelle, de l'ensemble des vecteurs vitesse.

Le problème qui était à l'origine de la présente invention, mais qui, cependant, n'en limite pas la portée, consistait à visualiser, à bord d'un hélicoptère volant, de nuit, près du sol, les obstacles proches sur sa trajectoire, qui étaient observés par une caméra infrarouge, et à les mettre en évidence par rapport aux obstacles lointains.

Un dispositif mettant en oeuvre un procédé tel que mentionné ci-dessus est connu par FR-A-2 642 529. Il fournit la direction de déplacement de l'aéronef et, associé a un système de mesure de vitesse, il permet de déterminer la position de l'aéronef par rapport au terrain survolé et d'effectuer un suivi de terrain grâce à une carte des reliefs.

Dans le cas du problème mentionné ci-dessus, une carte n'est d'aucune utilité car il s'agit en fait d'obstacles de faible taille, comme des arbres, et, un hélicoptère pouvant frôler ces obstacles, la trajectoire doit être corrigée très rapidement.

La caméra infrarouge fournissait l'image du paysage autour de la trajectoire et le pilote de l'hélicoptère devait estimer la distance des obstacles d'après leur taille angulaire, ce qui comportait de gros risques d'erreur lorsque leur taille était mal connue, tout en nécessitant une attention soutenue.

La présente invention vise à éviter cet inconvénient et à éliminer tout risque d'accident.

A cet effet, elle concerne un procédé du type mentionné ci-dessus, procédé caractérisé par le fait qu'on détermine la distance entre la caméra et lesdits objets en attribuant, à chaque point caractéristique, une valeur de distance relative à la caméra d'autant plus faible que le module du vecteur vitesse associé est grand et que la distance entre le point caractéristique correspondant et ledit point de concours est faible, et on utilise ladite valeur de distance relative pour fournir une indication de proximité.

Ainsi, on dispose d'une carte de profondeur relative des divers points caractéristiques, c'est-à-dire des points ou petites taches faciles à identifier et à suivre d'une image à l'autre, de par leur forme ou leur brillance, par exemple.

Il est alors aisé de les associer, pa groupes de points voisins ayant un même vecteur vitesse, à un objet, dont l'image est ainsi associée, ou "marquée", par l'amplitude du vecteur vitesse, amplitude qui peut être exploitée par des moyens de calcul traitant l'image et fournissant une information correspondante au pilote ou à un système de pilotage.

Avantageusement, on forme, avec les points caractéristiques, des lignes ou des portions de surface, et on détermine une distance relative moyenne desdites lignes ou portions de surface à la caméra en utilisant un autre vecteur vitesse qui est une moyenne pondérée des vecteurs vitesse des points caractéristiques desdites lignes ou portions de surface. On peut ainsi "marquer" de façon spatialement continue les contours, lignes ou surfaces caractéristiques d'un objet, qui est alors mieux défini.

Plus avantageusement encore, on utilise une partie seulement des points caractéristiques à partir desquels lesdites lignes ou portions de surface sont formées et appartenant à une même image d'objet, pour corriger la distance relative moyenne déterminée à partir de ces dites lignes ou portions de surface, et inversement.

De cette façon, on peut encore améliorer les résultats.

En effet, le procédé énoncé préalablement porte sur des points caractéristiques considérés isolément, dont la détermination de la distance relative peut, pour certains, comporter une erreur grossière, due à une localisation incorrecte de l'une des positions de ces points caractéristiques, mal restituée par la caméra, par exemple.

Quant à la solution fondée sur des ensembles, lignes ou surfaces, de points caractéristiques, la détermination de distance peut être faussée par des déformations, des glissements de points de réflexion ou des rotations de lignes ou surfaces.

Comme on peut souvent associer aux lignes ou aux surfaces de l'image d'un objet plusieurs points caractéristiques voisins, ou superposés à celles-ci, appartenant à cette image et fournissant individuellement une distance relative selon la mise en oeuvre du procédé énoncée préalablement, on peut alors détecter une erreur grossière s'il est attribué à l'un de ces points caractéristiques une distance relative très différente de celle de la ligne ou surface associée, concernant le même objet.

On peut alors tenter de corriger l'erreur, ou simplement ne pas prendre en compte la distance relative erronée. Disposant alors de distances relatives correctes associées à des points caractéristiques de positions bien définies, on peut ensuite corriger les vitesses relatives des lignes ou surfaces associées. Inversement, l'amélioration de la précision de détermination des distances relatives des lignes ou surfaces permet de détecter à nouveau des erreurs, moins grossières, sur la distance relative des points caractéristiques considérés individuellement, ce qui conduit à une amélioration itérative de la précision de définition des distances des objets.

Avantageusement, la distance relative moyenne déterminée à partir desdites lignes ou portions de surface est corrigée par des points caractéristiques étrangers à la formation desdites lignes ou portions de surface.

Avantageusement encore, pour éviter au mieux les erreurs de distance, on identifie un point caractéristique actuel par comparaison de sa position avec des positions prédites de points caractéristiques passés.

Pour déterminer des distances absolues, et non plus simplement relatives, connaissant la distance absolue de l'un des objets, on considère constant le produit de la distance d'un objet à la caméra et de son vecteur vitesse relatif, rapport du vecteur vitesse à sa distance au point de concours, pour déterminer cette distance.

Avantageusement toujours, ladite indication de proximité d'un point est affichée sur un écran de visualisation des vues prises par ladite caméra.

L'invention sera mieux comprise à l'aide de la description suivante du mode de réalisation préféré du procédé de l'invention, en référence au dessin annexé, sur lequel :

- la figure 1 représente une caméra d'hélicoptère observant une scène ;

- la figure 2 représente l'image de la scène ;

- la figure 3 représente des images partielles d'objets de la figure 2 ainsi que l'image partielle correspondante suivante et

- la figure 4 est un diagramme illustrant les étapes de traitement des images, pour déterminer la distance relative recherchée.

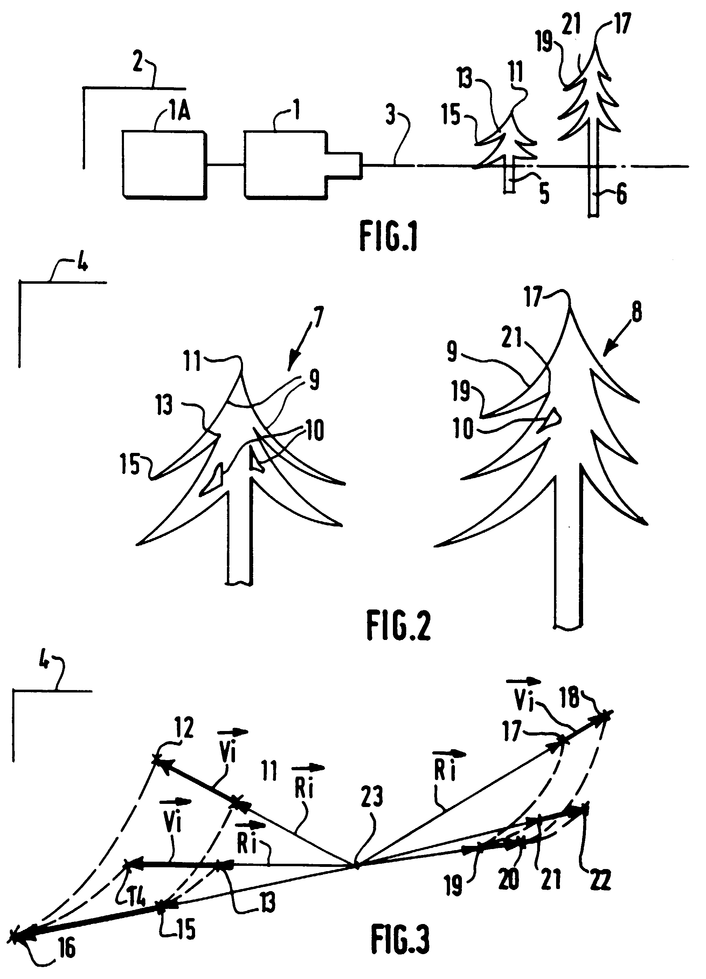

Une caméra 1 montée à bord d'un hélicoptère 2, dont l'axe de visée 3 (figure 1) est orienté selon la trajectoire de celui-ci, fournit un signal d'image représentatif d'une suite d'images 4 d'une scène observée, dont l'une est représentée sur la figure 2.

La scène comporte des objets fixes, ici deux arbres 5 et 6 à distances différentes de la caméra 1. Les images 4 sont prises à rythme suffisant pour que l'image des objets puisse facilement être suivie et ne se déforme pas sensiblement d'une image à l'autre. Dans cet exemple, l'arbre 6, le plus lointain, présente une hauteur angulaire supérieure à celle de l'arbre 5.

L'image 7, 8 de chaque arbre 5, 6 est définie par une suite de segments curvilignes 9 formant le contour de l'arbre ainsi que par d'autres segments curvilignes 10 relatifs à des détails à l'intérieur des images 7, 8.

Les points formant les segments 9, 10, en pratique plusieurs rangées voisines de points élémentaires, sont dits points caractéristiques. Les points caractéristiques sont donc en fait de petites taches, jointives dans ce cas, présentant un gradient élevé d'intensité ou, le cas échéant, de couleur, dans la direction perpendiculaire au segment, ce qui permet de repérer facilement ce dernier.

Les points (ou taches) caractéristiques dont le gradient ci-dessus est élevé dans deux directions, par exemple au raccordement anguleux de deux segments 9, sont appelés points caractéristiques spécifiques, car leur position, étant définie par rapport deux directions, est déterminable avec précision.

Par opposition, les points caractéristiques appartenant à un segment 9 ne présentent en général pas de gradient d'intensité dans la direction parallèle au segment 9 si bien que leur position individuelle ne peut qu'être estimée, d'après la longueur ou la forme du segment 9.

La figure 3 représente trois points caractéristiques spécifiques 11, 13 et 15 de l'image 7 ainsi trois autres 17, 19 et 21, de l'image 8.

Il est aussi représenté les positions des points caractéristiques spécifiques ci-dessus correspondant à l'image suivante, respectivement 12, 14 et 16 ainsi que 18, 20 et 22.

En traçant les six droites joignant les deux points caractéristiques spécifiques homologues des deux images, on détermine un point de concours commun, ou point d'expansion 23. La ligne de visée 3 passe par le point d'expansion 23 et tous les points de l'image 4 s'éloignent radialement, d'une image 4 à la suivante, du point d'expansion 23 dans le cas où, comme ici, la caméra 1 se rapproche de la scène observée.

On détermine alors, ici au moyen d'un bloc de calcul 1A recevant, de la caméra 1, le signal représentatif de la suite d'images 4, et pour chaque point caractéristique spécifique, comme 11, un vecteur vitesse $\vec{Vi}$ partant de la position initiale (11) et aboutissant à la position finale (12). Les points caractéristiques spécifiques comme 11 ont préalablement été identifiés par le bloc de calcul 1A en utilisant un logiciel de type connu pour la reconnaissance de formes.

La longueur d'un vecteur $\vec{Ri}$ allant du point d'expansion 23 au point caractéristique spécifique, comme 11, est aussi calculée par le bloc de calcul 1A, qui divise ensuite la longueur du vecteur $\vec{Vi}$ par celle du vecteur $\vec{Ri}$ pour obtenir un vecteur vitesse relatif $\vec{Vri}$ semblable au vecteur vitesse $\vec{Vi}$ mais de longueur définie par le rapport ci-dessus. On notera que des vecteurs vitesse relatifs $\vec{Vri}$ pourraient aussi être obtenus en divisant la longueur du vecteur vitesse $\vec{Vi}$ par celle du vecteur joignant le point d'expansion 23 à la position finale (12) du point caractéristique spécifique, et non à la position initiale (11).

Comme le montre la figure 3, les points caractéristiques spécifiques 11, 13 et 15 de l'image 7 de l'arbre 5 ont une vitesse $|\vec{Vi}|$ supérieure à celle des points caractéristiques 17, 19 et 21 relatifs à l'arbre 6, tandis que les vecteurs $\vec{Ri}$ sont sensiblement de même taille. Les vecteurs vitesse relatifs $\vec{Vri}$ de l'image de l'arbre 5, le plus proche de la caméra 1, sont donc plus grands que ceux relatifs à l'arbre 6. On en déduit que c'est l'arbre 5 qui, bien qu'apparemment plus lointain car l'image 7 est plus petite, est le plus proche de la caméra 1.

Dans cet exemple, il n'est pas prévu d'exploitation informatique de la distance relative déterminée, afin de corriger la trajectoire, si bien que c'est un dispositif de restitution de l'image 4, non représenté, qui fournit une indication de proximité relative, ici en faisant apparaître en rouge l'arbre 5 dans l'image 4.

De plus, le rapport entre les modules des vecteurs vitesse relatifs $\vec{Vri}$ des points caractéristiques spécifiques de l'un des arbres 5,6 (sensiblement égaux pour le même arbre) et ceux de l'autre arbre fournit la proportion entre les distances respectives séparant chaque arbre 5,6 de la caméra 1. L'image restituée de l'arbre 6 apparaît en rose plus ou moins pâle selon que la proportion ci-dessus des distances est éloignée ou non du rapport unitaire.

Le même procédé peut être utilisé en traitant un plus grand nombre de points caractéristiques, alors non spécifiques, par exemple des segments 9 et 10 et même des portions de surface constituées, ou limitées, par des points caractéristiques, par exemple, ici, une surface limitée par des segments 10 et qui présente une forte luminosité ou une couleur localement différente de celle de son voisinage.

L'algorithme de Canny-Deriche permet l'extraction, ou repérage, des contours, tandis que l'algorithme de Giraudon permet le chaînage des contours, pour obtenir un segment.

Le logiciel connu de reconnaissance de formes effectue alors un suivi temporel de l'image des segments et surfaces 9, 10 et, déplaçant fictivement les segments et surfaces 9, 10 de leur position à la suivante, définit une correspondance point à point d'où il est calculé, comme ci-dessus, les vecteurs vitesse relatifs $\vec{Vri}$ de chacun des points caractéristiques formant les segments et les surfaces 9, 10.

On calcule ensuite une valeur moyenne pour les vecteurs vitesse relatifs $\vec{Vri}$ d'un même segment ou surface 9,10 et on en définit une distance relative propre à chaque segment ou surface 9, 10.

La valeur moyenne ci-dessus des vecteurs vitesse relatifs $\vec{Vri}$ peut être obtenue par pondération uniforme par chaque vecteur vitesse relatif $\vec{Vri}$ l'engendrant, mais elle peut aussi être obtenue en pondérant plus fortement les vecteurs vitesse relatifs $\vec{Vri}$ dont la position du point caractéristique associé a été déterminée avec précision, par exemple s'il s'agit d'un point caractéristique spécifique, entouré de points caractéristiques non spécifiques.

Les segments ou surfaces 9,10 appartenant à l'image 7,8 d'un même arbre 5,6 sont, de par leur appartenance à la surface d'image limitée par le contour de l'arbre 5,6, associées à des valeurs de distance relative sensiblement égales, si bien que tout le contour de chaque arbre 5,6 et les surfaces (10) de son image 7,8 apparaissent avec la même couleur rouge ou rose et permettent de reconnaître aisément la forme de l'arbre.

Avantageusement, on applique le procédé à des points caractéristiques spécifiques, donc identifiés, ainsi qu'à des segments ou surfaces 9, 10 pour lesquels les points caractéristiques ne sont pas, en général, identifiés, et leur déplacement d'une image à une autre est estimé par corrélation des formes des segments ou surfaces 9,10, donc à une ou deux dimensions, qui, elles, présentent l'inconvénient d'être susceptibles de se déformer et de fausser ainsi partiellement le vecteur vitesse estimé $\vec{Vri}$.

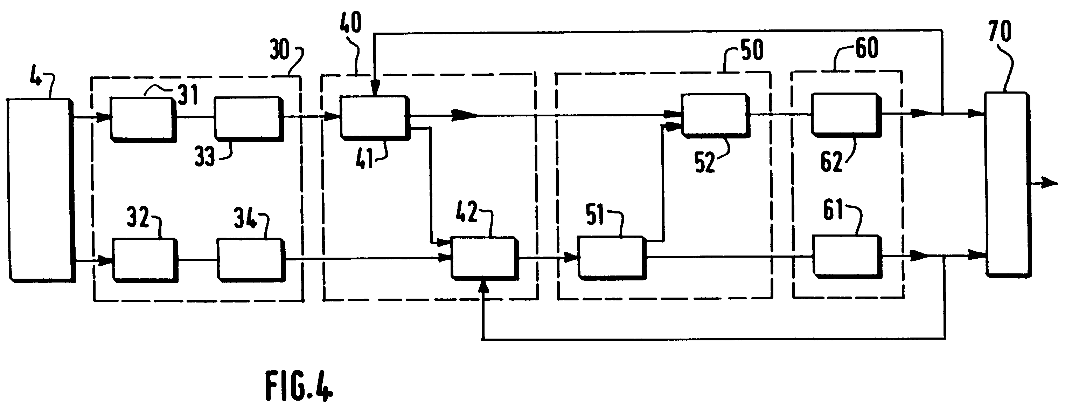

La figure 4 est un organigramme des étapes du procédé ci-dessus. On y définit cinq phases d'étapes, (30, 40, 50, 60 et 70), à savoir :

- une extraction de points caractéristiques spécifiques et segments "caractéristiques" 9,

- une affectation ou identification des points caractéristiques spécifiques ou des segments caractéristiques observés en dernier à des positions prévues extrapolées des points caractéristiques spécifiques ou segments caractéristiques, précédemment identifiés,

- une validation des affectations,

- un filtrage temporel des positions prévues, dont le résultat est transmis, en rebouclage, à la phase d'affectation, et

- un calcul de distance relative.

Dans la première phase 30, d'extraction, les points caractéristiques spécifiques sont repérés en 31, et leurs positions mesurées sont mémorisées en 33, et, de même, les segments 9,10 formés de points caractéristiques sont aussi repérés, en 32, et leurs positions mesurées sont mémorisées en 34.

Dans la phase d'affectation 40, on cherche à effectuer un pistage temporel des divers points caractéristiques spécifiques et segments caractéristiques, afin d'éviter des erreurs dues au fait qu'un point caractéristique spécifique ou segment caractéristique serait confondu avec un autre, ce qui fausserait la détermination de sa vitesse. Dans ce but, on utilise deux corrélations.

La première corrélation est temporelle et consiste à prédire par extrapolation, d'après ses dernières positions, la position la plus probable de la piste de chaque point caractéristique spécifique et des segments ou surfaces 9,10. La seconde corrélation est spatiale et consiste à associer des points caractéristiques spécifiques à des segments ou surfaces 9,10 voisins, appartenant à l'image (7,8) d'un même objet observé (5,6), afin de détecter les écarts des vecteurs vitesse qui, relatifs à un même objet, ne peuvent beaucoup différer entre eux.

Ainsi, en 41, on reçoit, en provenance d'une sortie de la phase de filtrage 60, une prévision nouvelle des positions extrapolées des points caractéristiques spécifiques, tandis que les positions homologues mesurées, mémorisées en 33, sont aussi fournies.

Par comparaison des distances entre chaque position prévue et la position la plus proche mesurée, on identifie chaque point caractéristique spécifique traité en 33 comme étant celui, déjà identifié, dont la position prévue est voisine de celle venant d'être observée (33).

Il est procédé de même pour les segments et surfaces 9,10, à une étape 42 où l'on reçoit, en provenance d'une sortie de la phase de filtrage 60, une prévision nouvelle des positions, extrapolées à partir de pistes temporelles définies plus loin, des segments et surfaces 9,10. Cette prévision est comparée aux positions mesurées (34), pour retenir la position prévue d'un segment ou surface 9,10 dont les positions des points caractéristiques présentent globalement la meilleure corrélation avec celles du segment ou surface 9,10 mesurées, ce qui permet d'identifier ce dernier.

De plus, le résultat de l'étape 41 de suivi des points caractéristiques spécifiques est fourni pour effectuer l'étape 42.

Cela permet de détecter une discordance trop grande entre, par exemple, les vitesses de points caractéristiques spécifiques associés, qui appartiendraient à un même segment 9 ou qui, étrangers au segment 9, appartiendraient à la même image 7,8 d'objet, ou de détecter une discordance de points caractéristiques spécifiques par rapport au segment 9 associé.

On peut, par cette association, ainsi détecter qu'un point caractéristique spécifique a une vitesse anormale par rapport aux autres points caractéristiques spécifiques associés. De même, si le segment ou surface 9,10 a une vitesse moyenne anormale, il se peut que le segment ou surface 9,10 soit un reflet se déplaçant très rapidement sur une surface qui tourne, ou inversement, un reflet qui reste immobile sur une surface sphérique tournante. Au contraire, les points caractéristiques spécifiques, qui correspondent en général à l'image de points de raccordement de lignes matérielles (9), ont la vitesse des points matériels qu'ils représentent.

Cela permet de détecter une erreur, pouvant porter sur toute une surface, due à une détection de vitesse d'un reflet, se déplaçant avec une vitesse de phase, c'est-à-dire pouvant prendre toute valeur, indépendamment des lois de la mécanique, qui n'a aucun rapport avec la vitesse réelle de la surface réfléchissante.

Dans la phase de validation 50, on exploite en 51 les discordances de vitesse relevées en recherchant, en cas de discordance manifeste des vitesses ci-dessus, une autre affection du segment ou surface 9,10, mal identifié.

Cette recherche s'effectue parmi les points d'une fenêtre d'image de taille limitée comportant en son centre le point caractéristique à affecter à une piste ainsi que les pistes voisines, candidates pour reconnaître ce point caractéristique comme étant celui les concernant. En cas d'impossibilité pour trouver une affectation meilleure, les données correspondantes sont masquées pour la suite des étapes.

On remarquera que, de façon pratique, il est avantageux d'effectuer une affectation des segments et surfaces 9,10 en utilisant d'abord les résultats d'affectation des points caractéristiques spécifiques associés, ce qui réalise une pré-affection des segments ou surfaces 9,10, ensuite suivie de l'affectation normale dont le champ de recherche a ainsi été limité.

Les affectations validées des segments et surfaces 9,10 servent ici, inversement, à valider en 52 les affectations des points caractéristiques spécifiques déterminées en 41, selon le principe exposé en 51, et à affiner les positions mesurées.

Les résultats des étapes 51 et 52 subissent ensuite chacun un filtrage temporel, respectivement en 61 et 62, pour définir la piste suivie, d'une image à l'autre, par les points caractéristiques et pour prédire, par extrapolation, les positions futures des points caractéristiques spécifiques et des segments et surfaces 9,10, ces résultats servant, comme indiqué, aux étapes 42 et 41.

Dans cet exemple, on utilise plus de deux images antérieures pour prédire les positions futures, et modélise les pistes à partir de variables d'état qui sont les positions successives correspondantes observées et leurs dérivées temporelles. Les variables ci-dessus subissent un filtrage de Kalman permettant de prendre en compte les nouvelles valeurs des variables et d'éliminer progressivement l'influence des valeurs anciennes et, surtout, de réaliser les prédictions des positions des segments nécessaires à l'affectation des pistes.

L'étape 70 correspond au calcul de distance relative exposé précédemment et peut s'effectuer à partir des positions prévues en 60, ce qui fait bénéficier du filtrage correspondant, ou à partir des dernières positions, issues de 50.

On remarquera que si l'on a déterminé, par tout moyen connu, la distance absolue de la caméra 1 à un point donné, a priori quelconque, d'un des arbres 5,6, on peut associer l'image du point donné à un point caractéristique, spécifique ou non, de l'image 7,8 correspondante. Cette association peut être effectuée par le logiciel de reconnaissance de formes, s'il établit que l'image du point donné est à l'intérieur du contour de l'image 7,8 de l'arbre 5,6. On attribue alors à chaque autre point caractéristique de l'image 4 une distance absolue, par rapport à la caméra 1, inversement proportionnelle à la vitesse relative $\overrightarrow{Vri}$ de cet autre point caractéristique, c'est-à-dire une distance absolue égale à la distance absolue du point donné ci-dessus à la caméra 1, multipliée par le module du vecteur vitesse relatif $\overrightarrow{Vri}$, concernant le point donné (ou le point caractéristique associé) et divisée par le module du vecteur vitesse relatif $\overrightarrow{Vri}$ homologue correspondant à l'autre point caractéristique concerné. Dans cet exemple, il est prévu de faire clignoter les points caractéristiques correspondant à une distance absolue inférieure à un seuil déterminé.

## Revendications

1. Procédé d'aide au pilotage d'un aéronef volant à basse altitude pour l'évitement d'objets (5) d'une scène fixe observée par une caméra (1) à bord de l'aéronef orientée sensiblement selon la trajectoire de l'aéronef, dans lequel, pour chaque image actuelle reçue de la caméra (1) :

   - on détermine des positions (12), dans l'image actuelle, de points caractéristiques des objets (5) et on les mémorise,

   - on compare lesdites positions (12) aux positions correspondantes desdits points caractéristiques dans l'image précédente (11),

   - on détermine dans l'image actuelle, pour chaque point caractéristique, le module et l'orientation d'un vecteur vitesse ($\overrightarrow{Vi}$), correspondant à l'écart de position du point caractéristique entre l'image actuelle (12) et l'image précédente (11),

   - on détermine un point de concours (23), dans l'image actuelle, de l'ensemble des vecteurs vitesse ($\overrightarrow{Vi}$),

   Procédé caractérisé par le fait qu'on détermine la distance entre la caméra (1) et lesdits objets en attribuant à chaque point caractéristique, une valeur de distance relative à la caméra (1) d'autant plus faible que le module du vecteur vitesse associé ( $\overrightarrow{Vi}$) est grand et que la distance $|\overrightarrow{Ri}|$ entre le point caractéristique correspondant (11, 12) et ledit point de concours (23) est faible, et on utilise ladite valeur de distance relative pour fournir une indication de proximité.

2. Procédé selon la revendication 1, dans lequel, on forme, avec les points caractéristiques, des lignes (9) ou des portions de surface, et on détermine une distance relative moyenne desdites lignes (9) ou portions de surface à la caméra (1) en utilisant un autre vecteur vitesse qui est une moyenne pondérée des vecteurs vitesse ($\overrightarrow{Vi}$) des points caractéristiques (11) desdites lignes (9) ou portions de surface.

3. Procédé selon la revendication 2, dans lequel on utilise une partie seulement des points caractéristiques (11) à partir desquels lesdites lignes (9) ou portions de surface sont formés et appartenant à une même image d'objet, pour corriger la distance relative moyenne déterminée à partir de ces dites lignes (9) ou portions de surface, et inversement.

4. Procédé selon l'une des revendications 2 et 3, dans lequel la distance relative moyenne déterminée à partir desdites lignes (9) ou portions de surface est corrigée par des points caractéristiques étrangers à la formation desdites lignes (9) ou portions de surface.

5. Procédé selon l'une des revendications 1 à 4, dans lequel on identifie un point caractéristique actuel (12) par comparaison de sa position avec des positions prédites de points caractéristiques passés (11).

6. Procédé selon l'une des revendications 1 à 5, dans lequel on considère constant le produit de la distance d'un objet (5) à la caméra (1) et de son vecteur vitesse relatif ($\overrightarrow{Vri}$) pour déterminer cette distance.

7. Procédé selon l'une des revendications 1 à 6, dans lequel ladite indication de proximité d'un point est affichée sur un écran de visualisation des vues prises par ladite caméra (1).

8. Procédé selon la revendication 7, dans lequel ladite indication de proximité est affichée en couleur.

9. Procédé selon la revendication 7, dans lequel ladite indication de proximité est l'intensité lumineuse du point visualisé.

## Patentansprüche

1. Verfahren zum Führen eines in niedriger Höhe fliegenden Luftfahrzeugs zum Ausweichen vor Gegenständen (5) einer festliegenden, von einer Kamera (1) an Bord des Luftfahrzeugs beobachteten Szene, die im wesentlichen längs der Bahn des Luftfahrzeugs orientiert ist, wobei für jedes von der Kamera (1) empfangene aktuelle Bild:

   - Positionen (12) von charakteristischen Punkten der Gegenstände (5) im aktuellen Bild bestimmt und gespeichert werden;

   - die Positionen (12) mit den entsprechenden Positionen der charakteristischen Punkte im vorhergehenden Bild (11)verglichen werden;

- im aktuellen Bild für jeden charakteristischen Punkt der Betrag und die Orientierung eines Geschwindigkeitsvektors ( $\vec{Vi}$ ) bestimmt werden, die der Positionsabweichung des charakteristischen Punkts zwischen dem aktuellen Bild (12) und dem vorhergehenden Bild (11) entsprechen;

- ein Punkt (23) in dem aktuellen Bild bestimmt wird, in dem die Gesamtheit der Geschwindigkeitsvektoren ($\vec{Vi}$) zusammenlaufen,

dadurch gekennzeichnet, daß die Entfernung zwischen der Kamera (1) und den Gegenständen bestimmt wird, indem jedem charakteristischen Punkt ein Entfernungswert relativ zur Kamera (1) zugewiesen wird, der um so kleiner ist, je größer der zugeordnete Betrag des Geschwindigkeitsvektors ($\vec{Vi}$) ist und je geringer die Entfernung |$\vec{Ri}$| zwischen dem entsprechenden charakteristischen Punkt (11, 12) und dem Punkt (23) des Zusammenlaufens ist, und daß der relative Entfernungswert zum Liefern einer Nähenangabe verwendet wird.

2. Verfahren nach Anspruch 1, bei dem mit den charakteristischen Punkten Linien (9) oder Oberflächenabschnitte gebildet werden und eine mittlere Relativentfernung der Linien (9) oder Oberflächenabschnitte zu der Kamera (1) verwendet wird, indem ein weiterer Geschwindigkeitsvektor bestimmt wird, der ein gewichtetes Mittel der Geschwindigkeitsvektoren ($\vec{Vi}$) der charakteristischen Punke (11) der Linien (9) oder Oberflächenabschnitte ist.

3. Verfahren nach Anspruch 2, bei dem nur ein Teil der charakteristischen Punkte (11) verwendet wird, von denen ausgehend die Linien (9) oder Oberflächenabschnitte gebildet werden und die zu ein und demselben Gegenstandsbild gehören, um die mittlere Relativentfernung zu korrigieren, die ausgehend von diesen Linien (9) oder Oberflächenabschnitten gebildet sind, und umgekehrt.

4. Verfahren nach einem der Ansprüche 2 und 3, bei dem die ausgehend von den Linien (9) oder Oberflächenabschnitten bestimmte mittlere Relativentfernung durch charakteristische Punkte korrigiert wird, die der Bildung der Linien (9) oder Oberflächenabschnitte nicht zugehörig sind.

5. Verfahren nach einem der Ansprüche 1 bis 4, bei dem ein aktueller charakteristischer Punkt (12) durch Vergleich seiner Position mit vorhergesagten Positionen von vergangenen charakteristischen Punkten (11) identifiziert wird.

6. Verfahren nach einem der Ansprüche 1 bis 5, bei dem das Produkt aus der Entfernung (5) eines Gegenstands (5) zur Kamera (1) und seinem relativen Geschwindigkeitsvektors ($\vec{Vri}$) als konstant angesehen wird, um diese Entfernung zu bestimmen.

7. Verfahren nach einem der Ansprüche 1 bis 6, bei dem die Nähenangabe eines Punktes auf einem Bildschirm zur Visualisierung der von der Kamera geschossenen Aufnahmen angezeigt wird.

8. Verfahren nach Anspruch 7, bei dem die Nähenangabe farbig angezeigt wird.

9. Verfahren nach Anspruch 7, bei dem die Nähenangabe die Leuchtstärke des visualisierten Punktes ist.

## Claims

1. A method for assisting the piloting of a low-flying aircraft in order to avoid objects (5) in a fixed scene observed by a camera (1) on board the aircraft, orientated substantially in accordance with the trajectory of the aircraft, wherein for each current image received from the camera (1):

- the positions (12), in the current image, of characteristic points of the objects (5) are determined and stored,

- said positions (12) are compared with corresponding positions of the said characteristic points in the preceding image (11),

- for each characteristic point the modulus and orientation of a speed vector ($\vec{Vi}$) corresponding to the positional divergence of the characteristic point between the current image (12) and the preceding image (11) are determined in the current image,

- a convergence point (23), in the current image, of all the speed vectors ($\vec{Vi}$) is determined

the method being characterised in that the distance between the camera (1) and said objects is determined by attributing to each characteristic point a relative distance value from the camera (1) which is the smaller as the associated speed vector ($\vec{Vi}$) module is the greater and as the distance |$\vec{Ri}$| between the corresponding characteristic point (11, 12) and said convergence point (23) is the smaller, and the relative distance value is used to supply an indication of proximity.

2. A method according to claim 1, wherein the characteristic points are used to form outlines (9) or surface portions, and an average relative distance of the said outlines (9) or surface portions from the camera (1) is determined using another speed vector which is a weighted average of the speed vectors ($\vec{Vi}$) of the characteristic points (11) of said outlines (9) or surface portions.

3. A method according to claim 2, wherein use is made of only part of the characteristic points (11) from which said outlines (9) or surface portions are formed and belonging to one object image in order to correct the average relative distance determined from these said outlines (9) or surface portions, and vice versa.

4. A method according to one of claims 2 and 3, wherein the average relative distance determined from said outlines (9) or surface portions is corrected by characteristic points which were not taken into consideration for determining said outlines (9) or surface portions.

5. A method according to one of claims 1 to 4, wherein a current characteristic point (12) is identified by comparing its position with predicted positions of past characteristic points (11).

6. A method according to one of claims 1 to 5, wherein the product of the distance of an object (5) from the camera (1) and of its relative speed vector ($\vec{Vri}$) is considered to be constant to determine this distance.

7. A method according to one of claims 1 to 6, wherein said indication of proximity of one point is displayed on a screen for displaying views taken by the said camera (1).

8. A method according to claim 7, wherein said indication of proximity is displayed in colour.

9. A method according to claim 7, wherein the said indication of proximity is the light intensity of the displayed point.

**FIG.1**

**FIG.2**

**FIG.3**

FIG.4